# EUROPÄISCHE PATENTANMELDUNG

(11) **EP 3 957 864 A1**
(43) Veröffentlichungstag der Anmeldung: **23.02.2022**
(21) Anmeldenummer: 20191310.0
(22) Anmeldetag: 17.08.2020
(51) Int. Cl.: F04D 29/38, H02K 9/06

(54) **LÜFTER UND DYNAMOELEKTRISCHE MASCHINE MIT EINEM LÜFTER**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Matsche, Fabian, 92339 Beilngries (DE); Warmuth, Matthias, 97618 Windshausen (DE)

(57) **Zusammenfassung**

Die Erfindung betrifft einen Lüfter (2) mit einer Nabe, die auf eine um eine Achse (10) drehende Welle (9) positionierbar ist, wobei von der Nabe die einzelnen Lüfterflügel (4) im Wesentlichen radial abstehen, wobei die Lüfterflügel (4) Mittel aufweisen, um die Lüfterflügelgeometrie bei Einwirkung äußerer Kräfte reversibel zu verändern.

## Beschreibung

Die Erfindung betrifft einen Lüfter und dynamoelektrische rotatorische Maschine mit einem Lüfter.

Dynamoelektrische Maschinen, insbesondere Elektromotoren, werden entweder am elektrischen Netz oder mit einem Frequenzumrichter betrieben. Während die netzbetriebenen Motoren je nach Polzahl mit einer festen Drehzahl laufen, ist bei am Umrichter betriebenen Motoren ein weites Drehzahlspektrum möglich.

Bei Industrieanwendungen, z.B. im Bereich Pumpen, Lüfter und Kompressoren, werden je nach Motorachshöhe Elektromotoren im Drehzahlbereich 0 - 15000 U/min betrieben.

Dabei wird eine Eigenkühlung eingesetzt, d.h. durch einen am Läufer angebrachten Lüfter. Die Drehzahl des Lüfters entspricht der Drehzahl des Rotors.

Das bedeutet, dass bei sehr kleinen Drehzahlen die Kühlwirkung nur sehr gering ist. Bei hohen Drehzahlen ist bei vergleichsweise guter Kühlwirkung die Geräuschentwicklung des Lüfters außerhalb der zulässigen Norm.

Am Umrichter betriebene Motoren sogenannte VSD-Antriebe (varaible speed drive), werden die Lüfter nach der maximalen Drehzahl ausgelegt.

In dieser Auslegung werden die zulässige Geräuschentwicklung sowie die mechanische Festigkeit aufgrund der Zentrifugalkraft berücksichtigt. Dazu werden Lüfter verwendet, die im Außendurchmesser und der Schaufelfläche kleiner sind. Häufig werden Lüfter von kleineren Motorachshöhen verwendet. Dies hat jedoch den Nachteil, dass bei den unteren Drehzahlen aufgrund der geringeren Schaufelfläche zu wenig Kühlfunktion gegeben ist und der Motor mit reduzierter Leistung betrieben werden muss (Betrieb im De-Rating).

Ausgehend davon liegt der Erfindung die Aufgabe zugrunde, einen Lüfter für einen dynamischen Betrieb einer dynamoelektrischen rotatorischen Maschine zu schaffen, der bei ausreichender Kühlleistung der dynamoelektrischen rotatorischen Maschine die Geräuschvorgaben einhält.

Die Lösung der gestellten Aufgabe wird gelöst durch einen Lüfter, Lüfter mit einer Nabe, die auf eine um eine Achse drehende Welle positionierbar ist, wobei von der Nabe die einzelnen Lüfterflügel im Wesentlichen radial abstehen, wobei die Lüfterflügel Mittel aufweisen, um die Lüfterflügelgeometrie bei Einwirkung äußerer Kräfte reversibel zu verändern, der über ein Drehzahlspektrum einen nahezu konstanten Luftvolumenstrom erzeugt. Dies ist möglich durch eine automatische Anpassung der Lüfterflügelgeometrie an die jeweilige Drehzahl.

Die Lösung der gestellten Aufgabe gelingt auch durch eine dynamoelektrische rotatorische umrichtergespeiste Maschine mit Eigenbelüftung, mit zumindest einem Lüfter nach einem der vorhergehenden Ansprüche, wobei der Lüfter mit einer Welle drehfest verbunden ist, wobei eine Haube die drehzahlabhängige Kühlluftstrommenge führt.

Bei geringer Drehzahl bedeutet dies: große Schaufelflächen bei großem Außendurchmesser.

Bei hohen Drehzahlen: kleine Schaufelflächen bei geringerem Außendurchmesser.

Die für den jeweiligen Betrieb der elektrischen rotatorischen Maschine erforderliche Schaufelfläche stellt sich automatisch ein, im Zusammenspiel des durch den Lüfter im Betrieb aufgebauten Luftwiderstands und der gleichzeitig wirkenden Zentrifugalkraft auf den Lüfterflügel.

Druck bzw. Luftwiderstand mit im wesentlichen tangentialer Kraftrichtung versuchen den Lüfterflügel, entgegen der Drehrichtung, umzubiegen, während die Zentrifugalkraft den Lüfterflügel radial nach außen aufstellen will.

Entscheidend ist, dass bei steigender Drehzahl der Luftwiderstand gegenüber der Zentrifugalkraft eine stärkere Wirkung bekommt und somit der Außendurchmesser des Lüfters reduziert wird.

Wird die Drehzahl der Maschine wieder reduziert, fällt der Luftwiderstand ab und die Zentrifugalkraft bekommt Oberhand. Der Flügel stellt sich radial wieder auf.

In den verschiedenen Drehzahlen kommt es jeweils zu einem Gleichgewicht der Kräfte, die automatisch einen optimalen Außendurchmesser einstellen. Im unteren Drehzahlbereich ist ausreichend Kühlung gegeben, während im oberen Drehzahlbereich ebenfalls ausreichend gekühlt wird, dabei jedoch die Geräusche im zulässigen Bereich bleiben.

In der Auslegung des Kräftepaares, Luftwiderstand und Zentrifugalkraft, geht somit auch die Dichte des Lüfterflügels ein, sowie der mechanische Widerstand gegen Verformung. Um diesen Widerstand der Verformung zu reduzieren können zusätzlich Scharniere, üblicherweise in der Kunststofftechnik als Filmscharniere ausgebildet, verwendet werden.

Bei der Gestaltung des Lüfters kann auf einen Lüfterteller verzichtet werden. Diese Funktion kann das vor dem Lüfter positionierte Lagerschild übernehmen.

Erfindungsgemäß können dabei Lüfter bereitgestellt werden, die für jede Achshöhe und/oder Drehzahlbereiche der Maschine mit den jeweils dafür vorgesehenen Filmgelenken ausgestattet sind.

Die Erfindung sowie weitere vorteilhafte Ausgestaltungen der Erfindung werden anhand prinzipieller Ausführungsbeispiele näher erläutert; darin zeigen:
- FIG 1: einen prinzipiellen Längsschnitt einer dynamoelektrischen Maschine,
- FIG 2: einen erfindungsgemäßen Lüfter,
- FIG 3: ein Filmgelenk.

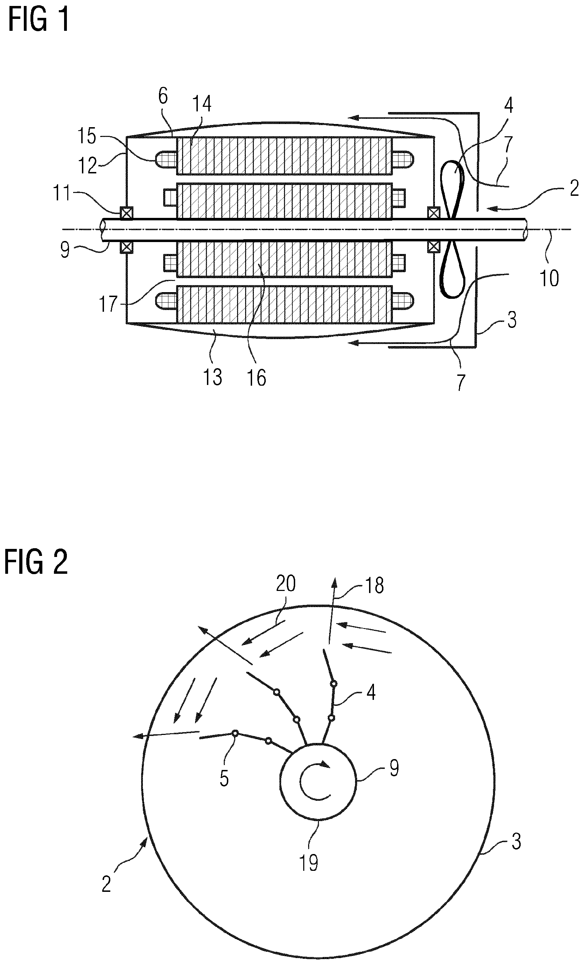

FIG 1 zeigt einen Längsschnitt einer prinzipiell dargestellten dynamoelektrischen rotatorischen Maschine 1, insbesondere eines Asynchronmotors mit Käfigläufer. Die dynamoelektrische Maschine 1 weist einen Stator 14 auf, der geblecht ausgeführt ist und an seinen Stirnseiten Wickelköpfe eines Wicklungssystems 15 aufweist. Der Stator 14 ist in einem Gehäuse 6 eingesetzt, insbesondere derart, dass ein Wärmeübergang vom Stator 14 auf das Gehäuse 6 erfolgt. Das Gehäuse 6 weist an seinem Außenumfang verteilt im Wesentlichen radial abstehende Rippen 13 auf, die der Kühlung der elektrischen Maschine 1 dienen.

Durch elektromagnetische Wechselwirkung mit einem Rotor 16, aufgrund eines bestromten Wicklungssystems 15 des Stators 14, wird eine Welle 9 in Drehung um eine Achse 10 versetzt. Die Welle 9 ist über Lager 11 und deren Lagerschild 12 am Gehäuse 6 positioniert. Auf der Welle 9 ist ein Lüfter 2 drehfest mit der Welle 9 verbunden. Dieser Lüfter 2 weist im Wesentlichen radial verlaufende Lüfterflügel 4 auf. Der Lüfter 2 saugt axial einen Luftstrom an, der durch die Lüfterflügel 4 und mithilfe einer Haube 3 umgelenkt wird, so dass sich ein Kühlluftstroms 7 entlang den Rippen 13 einstellt.

Durch den erfindungsgemäßen Lüfter 2, der im Weiteren näher vorgestellt wird, ist nunmehr über ein weites Drehzahlspektrum ein nahezu konstanter Luftvolumenstrom über die Rippen 13 generierbar. Dies ist möglich durch die automatische Anpassung der Lüfterflügelgeometrie an die jeweilige Drehzahl.

Bei geringer Drehzahl bedeutet dies: große Schaufelflächen bei großem Außendurchmesser, so dass ein ausreichender Kühlluftstromerzeugt wird.

Bei hohen Drehzahlen bedeutet dies: kleine Schaufelflächen bei geringerem Außendurchmesser, der Kühlluftstrom ist aufgrund der Drehzahl vorhanden und es werden weniger Geräusche verursacht.

FIG 2 zeigt einen Lüfter 2, der beispielhaft einige Lüfterflügel 4 aufweist, mit jeweils zwei Filmgelenken 5. Die Lüfterflügel 4 sind an einer Nabe positioniert, die auf einer Welle 9 drehfest fixierbar ist. Bei Drehung in eine Drehrichtung 19 stellen sich nun folgende Kräfteverhältnisse ein. Zum einen wirkt eine Kraft 20, die durch den Luftdruck bzw. Luftwiderstand einstellt. Des Weiteren wirkt die Zentrifugalkraft 18 auf die Lüfterflügel 4. Durch dieses Kräftegleichgewicht stellt sich nun eine effektive Lüfterfläche ein, die eine ausreichende Kühlung der Maschine sowohl bei niedrigen als auch bei hohen Drehzahlen gewährleistet. Damit werden hohe Geräuschentwicklung während der Kühlung vermieden.

Die Filmgelenke 5 werden dabei vorzugsweise als Materialdünnung des Lüfterflügelmaterials ausgeführt.

Alternativ können auch andere Materialien innerhalb des Lüfterflügels 4 eingesetzt werden, die weicher oder härter sind und auch somit den oben beschriebenen Effekt generieren.

Druck- bzw. Luftwiderstand mit im wesentlichen tangentialer Kraftrichtung versuchen die Lüfterflügel 4 entgegen der Drehrichtung umzubiegen, während die Zentrifugalkraft den Lüfterflügel 4 radial nach außen aufstellen will.

Entscheidend ist, dass bei steigender Drehzahl die Kraft 20 des Luftwiderstands gegenüber der Zentrifugalkraft 18 eine stärkere Wirkung bekommt und somit der Außendurchmesser des Lüfters 2 reduziert wird.

Wird die Drehzahl wieder reduziert fällt der Luftwiderstand ab und die Zentrifugalkraft 18 bekommt Oberhand. Der Lüfterflügel 4 stellt sich radial wieder auf.

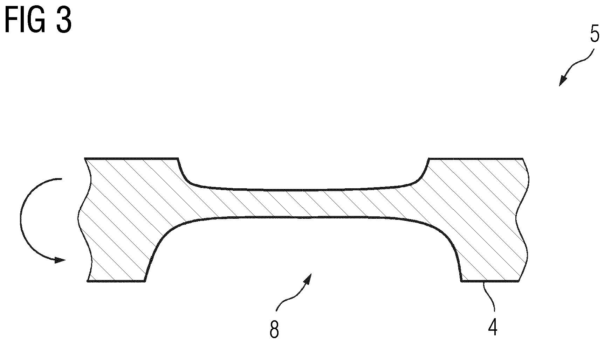

FIG 3 zeigt beispielhaft eine Ausbildung eines Filmgelenks 5, das insbesondere in einer Querschnittsverdünnung eines Lüfterflügels ausgeführt ist. Andere Ausführungen sind zur Ausbildung anderer Rückstellkräfte ebenso denkbar, das zeigt sich in anderen Radien, Stegbreiten, Steglängen; Materialdichten etc.

Erfindungsgemäß wird nunmehr über ein großes Drehzahlspektrum der dynamoelektrischen rotatorischen umrichtergespeisten Maschine ein nahezu konstanten Kühlluftvolumenstrom erzeugt.

## Patentansprüche

1. Lüfter (2) mit einer Nabe, die auf eine um eine Achse (10) drehende Welle (9) positionierbar ist, wobei von der Nabe die einzelnen Lüfterflügel (4) im Wesentlichen radial abstehen, wobei die Lüfterflügel (4) Mittel aufweisen, um die Lüfterflügelgeometrie bei Einwirkung äußerer Kräfte reversibel zu verändern.

2. Lüfter (2) nach Anspruch 1, **dadurch gekenn- zeichnet**, dass die Lüfterflügel (4) flexibel ausgeführt sind, derart, dass sie mit einer einstellbaren Rückstellkraft ausgestattet sind, die den Lüfterflügel (4) in einer Ebene senkrecht zu der Achse (10) bewegt.

3. Lüfter (2) nach Anspruch 1 oder 2, **dadurch ge**- **kennzeichnet**, dass pro Lüfterflügel (4) ein oder mehrere Filmgelenke (5) vorgesehen sind.

4. Lüfter (2) nach Anspruch 3, **dadurch gekenn- zeichnet**, dass die Filmgelenke (5) radial weiter außen am Lüfterflügel (4) andere Rückstellkräfte aufweisen, als radial weiter innen.

5. Dynamoelektrische rotatorische, insbesondere umrichtergespeiste Maschine (1) mit Eigenbelüftung, mit zumindest einem Lüfter (2) nach einem der vorhergehenden Ansprüche, wobei der Lüfter (2) mit einer Welle (9) drehfest verbunden ist, wobei eine Haube (3) die drehzahlabhängige Kühlluftstrommenge führt.
